# EUROPEAN PATENT APPLICATION

(11) **EP 3 012 950 A1**
(43) Date of publication of application: **27.04.2016**
(21) Application number: 14003602.1
(22) Date of filing: 22.10.2014
(51) Int. Cl.: H02K 37/08

(54) **Three phase axial stepper motor with a direct current excitation**

(71) Applicant: SiEVA d.o.o., PE Lipnica, 5290 Sempeter pri Gorici (SI)
(72) Inventor: Subic, Danilo, 4000 Kranj (SI)
(74) Representative: Macek, Gregor

(57) **Abstract**

The present invention is a three-phase axial stepper motor with DC excitation that enables rotation in the pre-determined direction as a response to the successively generated electrical signals, whereby the invention avoids the use of permanent magnets on the rotor and nevertheless achieves torque values that are higher than those that can be produced by variable-reluctance stepper motors or achieves motor characteristics that are similar to those of axial permanent magnet motors. The rotation itself depends on the control of the stator poles (6) and the design of the three-tooth symmetrical rotor plates (1A,1B), which are interconnected by a ferromagnetic shaft (9), onto which a DC excitation winding (5) of the rotor (2) is mounted axially, whereby the excitation winding is stationary and - owing to its construction - enables there to be no mechanical connection between the ferromagnetic rotor of the motor (2) and the excitation winding (5) of the rotor (2), on which the DC excitation causes all the teeth of the upper rotor plate (1A) to become polarized as the N-pole and all teeth of the lower rotor plate (1B) to become polarized as the S-pole.

## Description

### Subject of the Invention

The subject of the invention is a three-phase axial stepper motor that allows rotation into a predetermined position as a response to successively generated electrical signals.

### Technical Problem

The technical problem solved by the invention is how to avoid the use of permanent magnets on the motor's rotor and nevertheless ensure torque that is greater than the one that can be produced by variable-reluctance stepper motors. In addition to the above, the invention enables the operation of the stepper motor at temperatures that are higher than those enabled by the use of rare-earth permanent magnets.

### Background Art

In general, we know of three versions of stepper motors that are distinguished primarily by the version of the rotor. The most basic is the variable-reluctance stepper motor where the rotor is made of a ferromagnetic material with salient poles. The most frequent are the stepper motors with a permanent magnet rotor. There are also the so-called hybrid stepper motors where the rotor is a combination of a permanent magnet rotor and a reluctance rotor.

It can be concluded from the above that it is possible to construct a version of the stepper motor where the stepper motor's rotor is constructed as a combination of a variable-reluctance stepper motor made of a ferromagnetic material with salient poles and an electromagnet, i.e. an excitation winding, which is the subject of the present invention. It is essentially a version of a hybrid stepper motor where an excitation winding is used instead of a rotor with a permanent magnet. The problem lies in the appropriate execution of the connection of current to the excitation winding, which can be performed in several ways. US patent No. 4488074 presents the use of slip rings and brushes. The deficiency of such a solution is sparking and wear and tear on the slip rings and brushes, which shortens the life time and reduces the reliability of the motor's operation. One of the embodiments involves a direct connection of the excitation winding to the controls, which is also the subject of the presented invention. In this way, the reliability of the motor's operation is increased significantly because this avoids the problems caused by brushes and slip rings.

### Solution to the Technical Problem

The assignment and objective of the invention are how to construct an axial stepper motor, which avoids the use of permanent magnets on the rotor, and nevertheless achieve torque values that are greater than those that can be produced by variable-reluctance stepper motors or achieve motor characteristics that are similar to those of axial permanent magnet motors. Because the use of rare-earth permanent magnets is avoided, the presented stepper motor is also a more favourable solution in terms of price.

Below, the invention is explained in greater detail based on the present embodiment and the submitted figures that depict:
Fig. 1 Axonometric view (partial transverse cross-section) of the three-phase axial stepper motor with DC excitation of the present invention;
Fig. 2 Transverse cross-section of the assembled motor of the present invention;
Fig. 3 Arrangement of stator poles and the connection of the excitation winding;
Fig. 4 Representation of the signals for the control of the three-phase axial stepper motor.

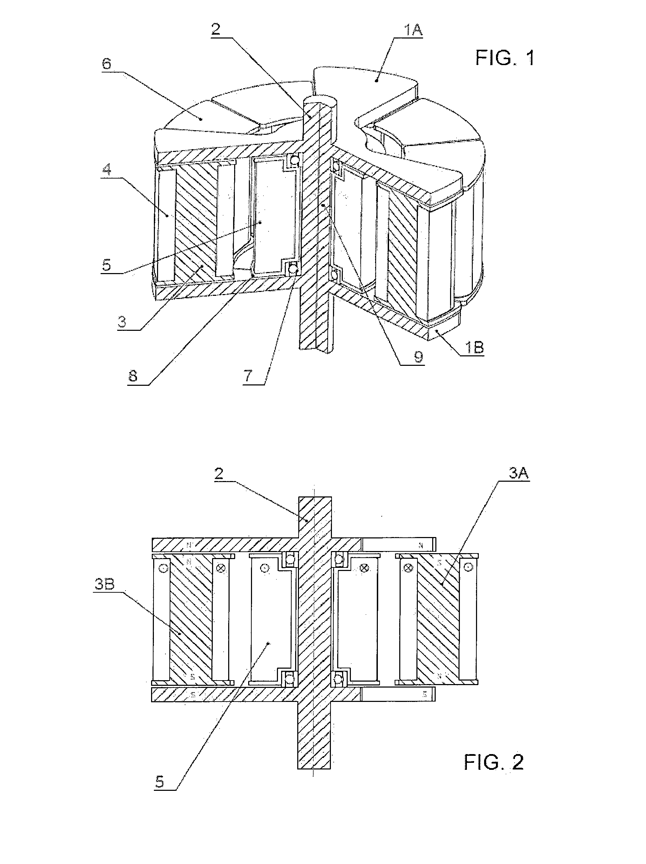

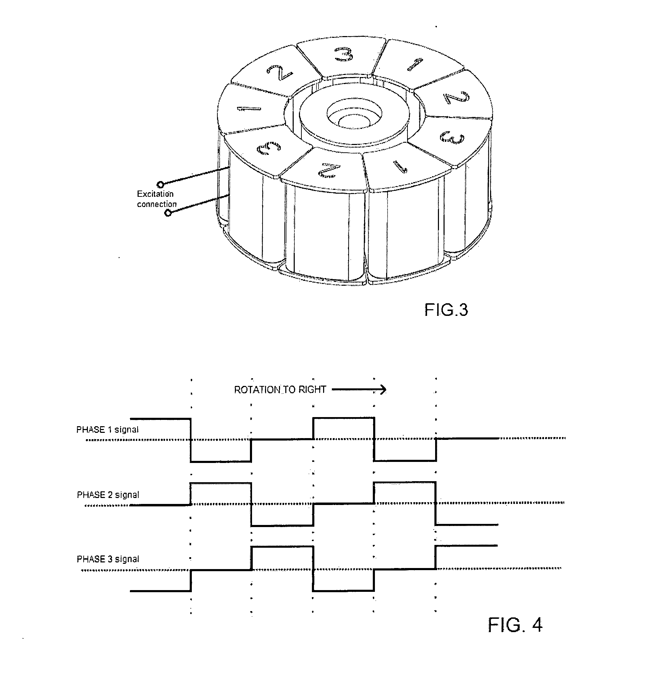

Fig. 1 shows that the three-phase axial stepper motor with DC excitation comprises a rotor 2 of the motor and stator poles 6. The rotor 2 comprises a shaft 9, triangular rotor plates, i.e. upper rotor plate 1A and lower rotor plate 1B, and an excitation winding 5. Rotor plates 1A and 1B are positioned on both front planes of the motor and are symmetrically mounted on the ferromagnetic shaft 9 of the rotor 2, which ensures a magnetic link of both rotor plates 1A, 1B. Rotor plates 1A, 1B are made of ferromagnetic sheet metal. Between the two pairs of ferromagnetic rotor plates 1A, 1B, the DC excitation winding 5 of the rotor 2 is mounted axially, which is stationary or does not rotate together with the rotor 2. The excitation winding 5 of the rotor 2 can be wound directly onto a plastic winding bobbin 8, which is adapted to the shape of the rotor 2 with a bearing assembly 7, and surrounds or separates the bobbin from the shaft 9 and rotor plates 1A, 1B. On the side facing the stator poles 6, the excitation winding 5 of the rotor 2 is not encased by the plastic winding bobbin 8. The rotation of the rotor 2 and rotor plates 1A, 1B is made possible by the bearing assembly 7 between the rotor plates 1A, 1B and the excitation winding 5 of the rotor 2. The bearing assembly 7 can be constructed in any known way. The shape of the plastic winding bobbin 8 of the excitation winding 5 of the rotor 2 and the bearing assembly 7 allows for no mechanical link between the ferromagnetic components of the motor's rotor 2 and the excitation winding 5 of the rotor 2. The construction solution without a mechanical link between the excitation winding 5 and the motor's rotor 2 does not affect the magnetic connection between the excitation winding 5 of the rotor 2 and the ferromagnetic components of the rotor 2 because the DC current in the excitation winding 5 of the rotor 2 generates a magnetic field, the magnetic flux lines of which are parallel to the ferromagnetic shaft 9 of the rotor 2 and the rotation of the shaft 9 subsequently does not affect the direction of the magnetic field generated in the shaft 9 of the rotor 2. The excitation winding 5 of the rotor 2 is connected directly to DC current control with two conductors, which may be routed between any two adjacent windings 4, i.e. as shown in Fig. 3. This method of direct connection does not require any increase in the air gap between the teeth of rotor plates 1A, 1B and the stator poles 6.

In order to operate and rotate in any direction, the present stepper motor requires a three-phase stator system. The stator system comprises stator poles 6, the number of which must always equal the product obtained from the multiplication of the number of teeth of rotor plates 1A, 1B and the number of phases. Stator poles 6 are arranged in a circle around the motor's rotor 2 and are composed of ferromagnetic cores 3 and windings 4.

The stepper motor in the present embodiment comprises nine stator poles 6; each phase comprises three stator poles 6. Ferromagnetic cores 3 of the stator poles 6 have an H-shape and may be manufactured from a single workpiece. In order to achieve higher speeds, all ferromagnetic cores 3 of the stator poles 6 and ferromagnetic parts of the rotor 2, i.e. the shaft 9 and rotor plates 1A, 1B, must be manufactured from sintered iron materials such as Somaloy. The windings 4 are separated from one another. The windings 4 of the stator poles 6 of an individual phase are arranged as shown in Fig. 3, whereby the phases follow one another in succession, i.e. phase one is followed by phase two, which is followed by phase three, and phase three is followed by phase one and so on. The windings 4 of an individual phase are connected to one another in parallel or in series, depending on the required motor characteristics and depending on the motor controller design.

Fig. 2 shows the transverse cross-section of the entire motor so that we can see the relative position of the stator poles 6 and the teeth of the rotor plates 1A, 1B at a given moment during observation. The polarity of the teeth of rotor plates 1A, 1B depends on the connection and the direction of the current in the excitation winding 5 of the rotor. In the present embodiment, as shown in Fig. 2, the teeth of the upper rotor plate 1 A are polarized with an N-pole polarity and all teeth of the lower rotor plate 1B are polarized with S-pole polarity. Meanwhile, one stator phase is controlled so that its generated magnetic field, i.e. the magnetic field of the windings 4 of three stator poles 6, opposes the magnetic field of the excitation winding 5 of the rotor, which occurs in the teeth of rotor plates 1A, 1B. Because of the existing magnetic state, stator poles 6 of one phase deflect the teeth of the rotor plates 1A, 1B, which cause the rotation of the rotor 2. The rotation direction depends on the phase that is connected at that time and must be controlled so that its generated magnetic field attracts the magnetic field of the excitation winding 5, which occurs on the teeth of the rotor plates 1A, 1B. In the present embodiment in Fig. 2, the generated magnetic fields, which are generated by the windings 4 of the ferromagnetic cores 3B of one phase, deflect the teeth of rotor plates 1A, 1B because they have the same polarity at their ends as the polarity of the rotor plates 1A, 1B, while the generated magnetic fields, which are generated by the windings 4 of ferromagnetic cores 3A of the other phase, attract the teeth of rotor plates 1A, 1B because they have the opposite polarity on their ends. This causes the rotation of the rotor 2 to the right assuming that the control is executed as shown in Fig. 4.

The number of teeth required for the rotor 2 to rotate one full revolution depends on the number of stator poles 6 of one phase and the number of teeth of rotor plates 1A, 1B. The number of required steps for one revolution of the rotor is equal to the product obtained from the multiplication of the number of stator poles 6 of one phase and the number of teeth of rotor plates 1A, 1B. In the present embodiment shown in Fig. 1, one rotation requires nine steps, meaning that the stepper motor allows step angles of 40 degrees.

The method of controlling the motor so that it rotates to the right is shown in Fig. 4, which is a schematic representation of the electrical signals that activate the individual phases of the motor. Signal levels above the abscissa, which is marked with an intermittent line, describe the positive direction of the current into the phase winding, which subsequently generates a magnetic field with the polarity of the N-pole above in core 3B of the stator pole and polarity of the S-pole below. Signal levels below the abscissa describe the negative direction of the current into the phase winding, which subsequently generates a magnetic field with the polarity of the S-pole above in core 3A of the stator pole and polarity of the N-pole below. When the signal is displayed on the abscissa, the phase winding is inactive or de-energized. The direction of the motor's rotation is determined by the sequences of the switching of individual phases. At the start, it is assumed that positive current flows into phase one of the motor, phase two is inactive and negative current flows into phase three. In order for the rotor 2 to rotate one step to the right, the direction of the current of the first phase must be switched from the positive to negative direction, positive current is connected to the second phase and the third phase must be de-energized. For each further step of the motor, it is necessary to control the currents as shown in Fig. 4. In case when the phases of stator poles 6 are de-energized, the energized excitation of the excitation winding 5 of the rotor 2 ensures that the motor remains in a stable position. The rotor 2 detent force in this position can also be adjusted by controlling the current through the excitation winding 5 of the rotor 2. Upon the complete shutdown of the motor, the rotor 2 rotates freely and the motor does not exhibit any detent.

The advantage of the motor described is that the use of permanent magnets is avoided on both rotor plates 1A, 1B as well as that the motor achieves higher torque values than variable-reluctance stepper motors. The advantage of the present solution is also that the excitation winding 5 of the rotor 2 does not rotate together with the rotor 2, but is rather stationary. In this way, the use of a commutator or slip rings is avoided as the excitation winding 5 of the rotor 2 shown in the solution can be connected directly to the DC current excitation circuit, which simplifies the construction of the motor significantly and also enhances the robustness and extends the useful life of the motor extensively.

## Claims

1. The three-phase axial stepper motor with DC excitation having an increased output torque on the shaft of the stepper motor and being of a similar configuration as a variable-reluctance electric motor whereby the motor is comprised of a motor's rotor (2) and stator poles (6), and the rotor (2) comprising a shaft (9), three-tooth rotor plates (1A, 1B) and an excitation winding (5), and the stator poles (6) being arranged in a circle around the motor's rotor (2) and composed of ferromagnetic cores (3) and windings (4), which is **characterised by** both front surfaces of the motor having two three-tooth symmetrical rotor plates, i.e. the upper rotor plate (1A) and the lower rotor plate (1B) that are interconnected with a ferromagnetic shaft (9), onto which a DC excitation winding (5) of the rotor (2) is mounted axially and is stationary, whereby the excitation winding (5) of the rotor (2) is directly wound onto a plastic winding bobbin (8) that separates the excitation winding (5) from the shaft (9) and rotor plates (1A, 1B), and having a bearing assembly (7) between the rotor plates (1A, 1B) and the excitation winding (5), whereby the excitation winding (5) of the rotor (2) is connected directly to the DC current excitation circuit using two conductors that are routed between any two adjacent windings (4).

2. The three-phase axial stepper motor with DC excitation according to claim 1, which is **characterised by** the ferromagnetic cores (3) of the stator poles (6) having an H shape and being made from a single workpiece, whereby all ferromagnetic cores (3) of the stator poles (6) and the ferromagnetic parts of the rotor (2), i.e. the shaft (9) and rotor plates (1A, 1B), are made of sintered iron materials in order to achieve higher speeds.

3. The three-phase axial stepper motor with DC excitation according to previous claims, which is **characterised by** the windings (4) of the stator poles (6) of an individual phase being separated from one another and arranged so that the phases follow one another successively and the windings (4) of the individual phase being connected to one another in parallel or in series.

4. The three-phase axial stepper motor with DC excitation according to previous claims, which is **characterised by** there being no mechanical connection between the ferromagnetic rotor of the motor (2) and the excitation winding (5) of the rotor (2) and the direction of rotation being determined by the sequence of the switching of individual phases.

5. The three-phase axial stepper motor with DC excitation according to previous claims, which is **characterised by** the connection and the direction of the current in the excitation winding (5) of the rotor (2) determining the polarity of the teeth of the rotor plates (1A, 1B) and one stator phase being controlled so that its generated magnetic field, i.e. the magnetic field of the winding (4) of three stator poles (6), opposes the magnetic field of the excitation winding (5) of the rotor (2), which occurs on the teeth of the rotor plates (1A, 1B), whereby the current magnetic state of the stator poles (6) of one phase deflect the teeth of the rotor plates (1A, 1B), which causes the rotor to rotate (2).

6. The three-phase axial stepper motor with DC excitation according to previous claims, which is **characterised by** the energized excitation of the excitation winding (5) of the rotor (2) ensuring that - when the phases of the stator poles (6) are de-energized - the motor remains in a stable position and that the detent of the rotor (2) in that position can be adjusted by controlling the current through the excitation winding (5) of the rotor (2), and by the rotor (2) being able to rotate freely upon the complete shutdown of the motor.

7. The use of a three-phase axial stepper motor with DC excitation of claims 1 through 6, which is **characterised by** the motor operating at high temperatures and in an environment with high ionising radiation as it does not contain permanent magnets and is thus not susceptible to demagnetisation of the rotor magnets.
